Europäisches Patentamt

**European Patent Office**

Office européen des brevets

(19)

(11) Numéro de publication : **0 314 568 B1**

(12)                                **FASCICULE DE BREVET EUROPEEN**

(45) Date de publication du fascicule du brevet :
24.04.91 Bulletin 91/17

(51) Int. Cl.⁵ : **B64D 29/02**

(21) Numéro de dépôt : **88402693.1**

(22) Date de dépôt : **26.10.88**

(54) Moteur d'aviation à très grand taux de dilution et ses intégrations sous l'aile d'un avion.

(30) Priorité : **28.10.87 FR 8714898**

(43) Date de publication de la demande :
**03.05.89 Bulletin 89/18**

(45) Mention de la délivrance du brevet :
**24.04.91 Bulletin 91/17**

(84) Etats contractants désignés :
**DE FR GB**

(56) Documents cités :
**GB-A- 2 188 987**
**US-A- 3 979 087**
**US-A- 4 436 263**

(73) Titulaire : **SOCIETE NATIONALE D'ETUDE ET DE CONSTRUCTION DE MOTEURS D'AVIATION, "S.N.E.C.M.A."**
**2, Boulevard du Général Martial Valin**
**F-75015 Paris (FR)**

(72) Inventeur : **Lardellier, Alain Marie Joseph**
**1, rue Augereau**
**F-77000 Melun (FR)**

(74) Mandataire : **Moinat, François et al**
**S.N.E.C.M.A. Service des Brevets Boîte Postale 81**
**F-91003 Evry Cédex (FR)**

EP 0 314 568 B1

Jouve, 18, rue Saint-Denis, 75001 PARIS

**Description**

La présente invention concerne une nacelle pour suspendre sous l'aile d'un avion un groupe turboréacteur double flux a très haute taux de dilution du type dit contrafan arrière selon le préambule de la revendication 1. Une telle nacelle est connu de GB-A-2 188 987.

Il est connu d'accrocher des turboréacteurs double flux à soufflante avant sous les ailes d'un avion, à l'extrémité d'un mât suspendu à l'aile. Un tel exemple est montré dans le document FR A- 2560 854. Ceci est possible pour les moteurs dont le taux de dilution est compris entre 5 et 10, ce qui entraîne des diamètres de soufflante encore compatibles avec une traînée relativement faible de la nacelle.

On a depuis réalisé des groupes turboréacteurs à très haut taux de dilution dont un générateur de gaz entraîne des turbines libres contra-rotatives elles-mêmes solidaires d'hélices contrarotatives non carénées de grande dimension. De tels moteurs autorisent des taux de dilution de flux compris entre 30 à 40 ce qui permet d'espérer des gains de 20 à 25% sur la consommation spécifique. L'inconvénient de ces moteurs réside dans le grand diamètre de leurs hélices qui a imposé jusqu'à ce jour de disposer les groupes turboréacteurs de ce type latéralement au fuselage de l'avion, et limite leur emploi à la formule bi-moteur.

On étudie également des moteurs à très haut taux de dilution (environ 15) à hélices simples ou contra-rotatives carénées qui, par rapport aux moteurs à hélices non carénées, devraient diminuer le bruit des hélices et permettre de loger plus facilement, leur diamètre étant plus faible, ce type de moteur sous une aile d'avion. En effet, le montage sous l'aile s'impose pratiquement pour les avions possédant plus de deux moteurs, des long-courriers par exemple.

Toutefois dans de tels moteurs à hélices contra-rotatives carénées, le gain théorique sur la consommation spécifique est presque totalement annihilé par l'augmentation corrélative de la masse et de la traînée du moteur. Les calculs montrent en effet que des avions gros porteurs équipés de moteurs à très haut taux de dilution à hélices contrarotatives carénées ne gagnent en rayon d'action que quelques centaines de kilomètres sur un vol de 9000 Kilomètres du fait que le gain global réel sur la consommation spécifique n'est que de 2 ou 3% en raison de l'augmentation de la trainée des moteurs et de leur masse.

Pour que de tels moteurs deviennent compétitifs, il importe que des gains substantiels soient faits sur leur trainée.

C'est un objectif de la présente invention d'y parvenir. Un autre objectif de l'invention est de réaliser une structure de nacelle qui permette d'accrocher de tels moteurs sous l'aile des avions et non plus seulement sur les côtés du fuselage de l'appareil.

Un autre but de l'invention est de réaliser une nacelle qui permette, par des capotages mobiles, de faciliter la maintenance des moteurs de ce type, qu'ils soient plaqués sous l'aile comme le propose une des dispositions de l'invention, ou classiquement montés en "pod", c'est à dire à distance de l'aile, comme le propose la variante de l'invention.

Un autre but est de réaliser pour ces moteurs une nacelle comportant des volets mobiles permettant d'asservir l'ouverture de la tuyère secondaire en fonction des conditions de vol et d'intégrer un inverseur de flux de réalisation simple.

Enfin, un dernier but est d'utiliser les volets mobiles (dans ce cas de petite taille) comme ouvertures facilitant le fonctionnement en inversion de flux, dans le cas où les hélices sont munies d'un dispositif à calage variable permettant l'inversion de flux, et l'adaptation aux conditions de vol.

L'invention a donc pour objet une nacelle pour suspendre sous l'aile d'un avion un groupe turboréacteur double flux à très haut taux de dilution du type dit contrafan arrière comportant un générateur de gaz entraînant deux turbines libres contrarotatives imbriqué solidaires d'hélices contrarotatives carénées situées en aval du générateur de gaz, ladite nacelle comportant de façon connue un capotage intérieur de forme générale cylindrique entourant le carter moteur et formant la paroi interne de la veine de flux froid et pouvant s'ouvrir de manière connue pour effectuer les travaux de maintenance et un capotage extérieur lui aussi de forme générale cylindrique dont le bord interne forme la paroi externe de la veine de flux froid et dont le bord externe forme l'enveloppe de la nacelle.

Selon l'invention, le groupe turboréacteur est suspendu à l'aile de l'avion par un mât comportant deux bras disposés dans un plan vertical contenant l'axe longitudinal du groupe turboréacteur, bras contenu dans un carénage profilé en forme du fuseau, et dont les extrémités supérieures sont liées à un caisson structural de l'aile et les extrémités inférieures sont solidaires d'un palonnier horizontal d'axe longitudinal disposé entre le carter moteur et le capotage intérieur, le groupe turboréacteur étant accroché au palonnier.

Selon un mode de réalisation, les extrémités supérieures des bras du mât sont reliées au caisson structural de l'aile par un mât de suspension avion de type conventionnel et le capotage extérieur se raccorde dans sa partie supérieure audit mât de suspension avion. Selon un autre mode de réalisation de l'invention, les extrémités supérieures des bras du mât sont solidaires du caisson structural de l'aile et l'épaisseur du capotage extérieur, comprise entre les bords interne et externe dudit capotage extérieur est, dans sa partie supérieure, intégrée à l'épaisseur de l'aile de l'avion.

De plus, le bord extérieur dudit capotage se raccorde à l'intrados de l'aile par un profil du type Karman évolutif de l'amont vers l'aval et dans un plan longitudinal axial situé à la verticale de l'axe longitudinal du groupe turboréacteur, la génératrice définissant le bord interne du capotage extérieur est globalement tangente à l'intrados de l'aile vu en coupe longitudinale. Dans ses deux modes de réalisation, une disposition particulièrement intéressante de l'invention consiste en ce que le capotage est en deux coquilles d'environ 120° d'angle montées sur des charnières longitudinales, ce qui permet une accessibilité tout à fait excellente de la partie d'hélice et moteur, lorsque ces coquilles sont ouvertes pour la maintenance.

D'autre part, le groupe turboréacteur est accroché au palonnier, par l'extrémité amont de celui-ci sur le carter moteur au droit des aubes directrices d'entrée et par l'extrémité aval de celui-ci. Sur la structure de transition disposée entre la turbine basse pression et les turbines libres.

Lorsque les coquilles du capotage extérieur sont ouvertes il est alors aisé de déposer le moteur à partir du palonnier en le faisant descendre verticalement à l'aide d'un palan, le capotage extérieur restant sur l'avion.

D'autres caractéristiques de l'invention seront précisées en regard des planches annexées accompagnées par le complément de description suivant. Parmi les planches,

– la figure 1 est une vue en coupe longitudinale axiale d'un groupe turboréacteur du type dit contrafan arrière, selon l'invention, équipé de sa nacelle intégrée à l'aile d'un avion ;
– la figure 1a est une vue schématique de la nacelle selon F2 de la figure 5 ;
– la figure 2 est une vue en section transversale selon C de la figure 1 ;
– la figure 3 est une demi-section transversale selon B de la figure 1 ;
– la figure 4 est une vue en section transversale regroupant dans la partie gauche de la figure la demi-section selon D de la figure 1 et dans la partie droite la demi-section selon A de la figure 1, ces sections étant découpées au niveau du plan vertical longitudinal axial de la nacelle du groupe turboréacteur :
– la figure 5 est une section transversale selon E de la figure 1
– la figure 5a est une vue partielle suivant F1 de la figure 2 montrant un détail de l'accrochage de la nacelle à la structure de l'aile.
– la figure 6 est une demi-section transversale selon G de la figure 1, c'est à dire au niveau des volets aval assurant l'optimisation de section de la tuyère secondaire et la fonction d'inversion de flux.
– la figure 7 est une section partielle selon H de la figure 6 montrant les vérins de commande des volets et la cinématique de déplacement desdits volets.
– la figure 8 est une section partielle selon K de la figure 6 dans le plan longitudinal axial séparant le secteur supérieur de la nacelle et un des secteurs latéraux, plan dans lequel est situé un des bras structuraux solidarisant les capotages intérieur et extérieur ainsi que le carter moteur et le cône central au palier arrière du moteur.
– la figure 9, montre, vu de l'amont un groupe turboréacteur selon l'invention accroché sous l'aile d'un avion au moyen d'un montage dit "en pod" comportant un mât avion de type classique.
– la figure 10 montre, en coupe similaire à celle de la figure 1, le groupe turboréacteur monté en "pod" selon la variante de la figure 9.
– la figure 10a est une vue schématique de la nacelle du moteur monté en "pod" de la variante selon les figures 9 et 10.

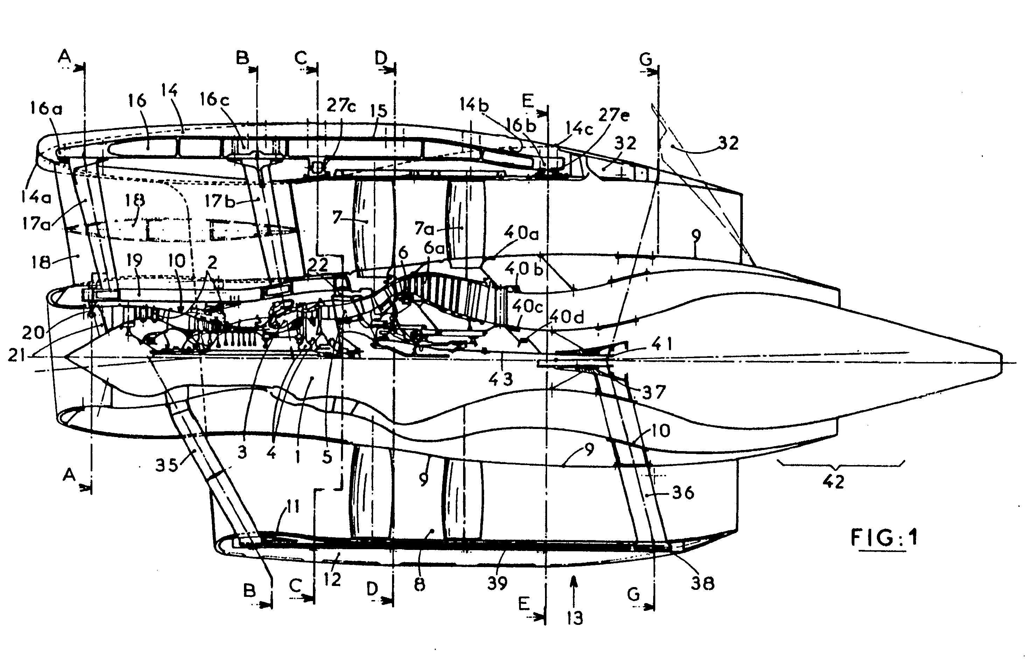

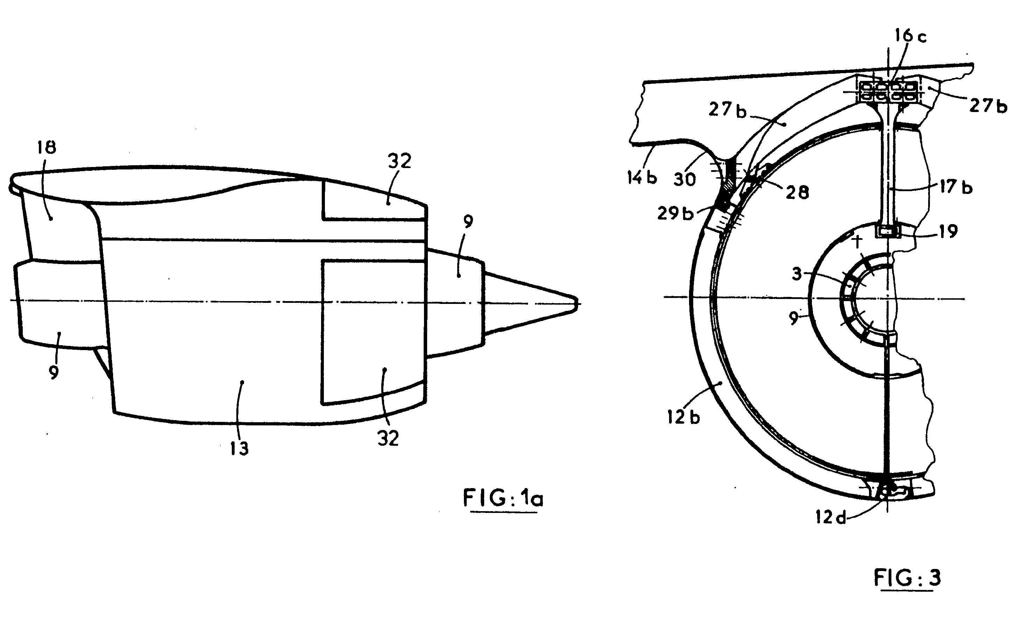

Sur la figure 1 a été représenté un groupe turboréacteur 1 comportant un générateur de gaz à double corps composé de deux compresseurs 2 délivrant de l'air comprimé à une chambre de combustion annulaire 3 où il est mélangé à du carburant, ce mélange étant brûlé pour être détendu et fournir une partie de l'énergie ainsi accumulée à deux turbines haute et basse pression 4 entraînant les compresseurs 2. En aval de ce générateur de gaz et après une structure de transition fixe 5 sont disposées deux turbines libres contrarotatives imbriquées 6 et 6a qui reçoivent l'énergie de l'air détendu en aval de la turbine 4 pour entraîner deux hélices contrarotatives 7 et 7a brassant de l'air froid dans une veine annulaire secondaire 8 entourant un capotage intérieur globalement référencé 9 et de forme générale cylindrique, le capotage 9 étant lui-même disposé autour du carter moteur 10. La veine secondaire 8 intérieurement délimitée par le capotage intérieur 9, est extérieurement délimitée par le bord interne 11 d'un capotage extérieur 12 formant l'enveloppe de la nacelle 13.

Le groupe turboréacteur étant ainsi succintement décrit, son premier mode d'accrochage sous l'aile d'un avion ainsi que la réalisation des capotages vont être explicités en référence à l'ensemble des figures 1 à 8.

L'aile 14 comporte un caisson structurel 15 comportant dans le plan longitudinal des moteurs une poutre longitudinale en caissons 16 dont la partie amont 16a est complètement intégrée à l'intérieur du bord d'attaque 14a de l'aile et dont la partie aval 16b traverse l'intrados 14b de l'aile et s'étend sous l'intrados jusqu'au droit du bord de fuite 14c de l'aile.

Suspendus à la partie amont 16a et à la partie médiane 16c de la poutre 16, deux bras 17a et 17b, contenus dans un carénage en fuseau 18, ont leur extrémité inférieure solidaire d'un palonnier horizontal 19 disposé entre le carter moteur 10 et le capotage intérieur 9. Le turboréacteur est accroché à ce palonnier 19 en amont par trois biellettes 20 au niveau des aubes directrices d'entrée 21 et en aval par trois biellettes 22 suspendues à deux bras support transversaux respectivement amont 23 et aval 24 solidaires du palonnier.

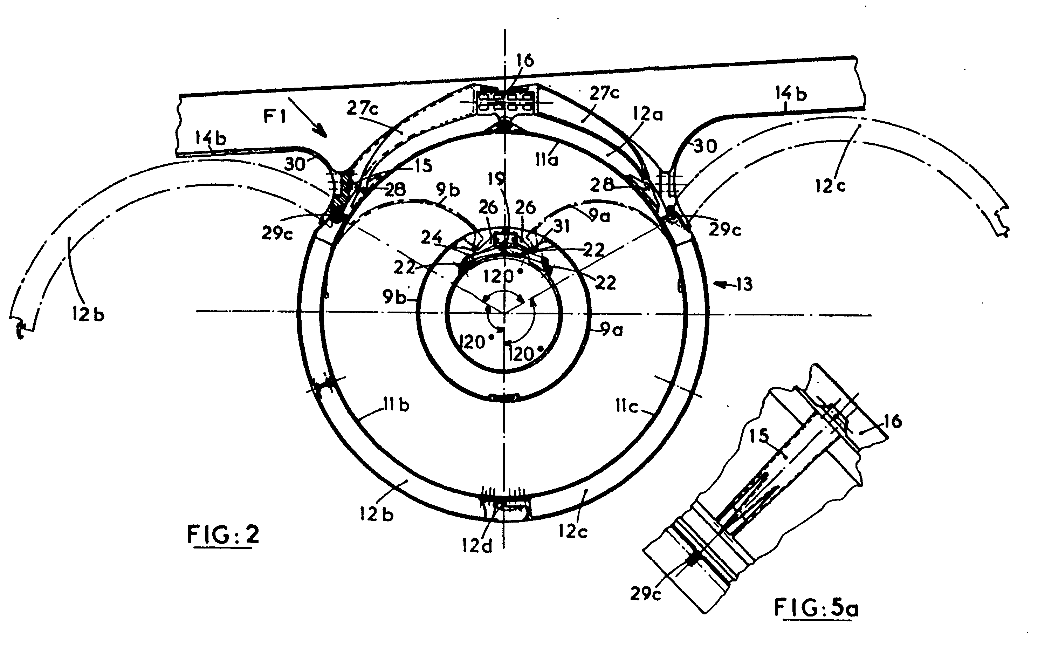

Le palonnier comporte également des oreilles amont 25 sur lesquelles sont articulées les capots mobiles 9a, 9b du capotage intérieur 9, ces derniers étant également articulés au niveau de l'extrémité aval du palonnier sur des supports aval 26 solidaires du palonnier (figure 2).

Le capotage extérieur 12 de la nacelle 13, quant à lui est, en coupe transversale, séparé en trois secteurs 12a, 12b, 12c de 120° chacun, le secteur supérieur 12a étant symétrique par rapport au plan vertical longitudinal 1.

La virole formant la paroi interne 11 du capotage extérieur est également séparée de la même façon en trois secteurs. Au droit des hélices, on dispose des structures de rétention 39 (fig 1) permettant d'absorber l'énergie en cas de bris d'une des pales d'hélice. Le secteur supérieur 11a est accroché par des axes 28 à des potences transversales doubles 27b, 27c, 27d, 27e solidaires de la poutre 16c respectivement situés dans les plans de coupe B, C, D, E., de telle sorte que la potence 27c et la potence 27e soient disposées respectivement en amont et en aval des hélices contrarotatives.

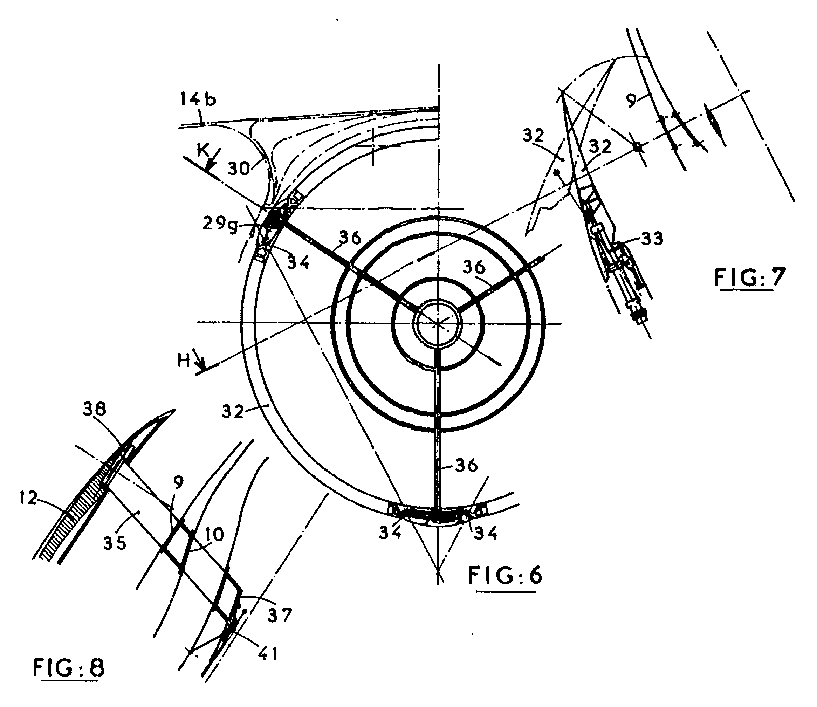

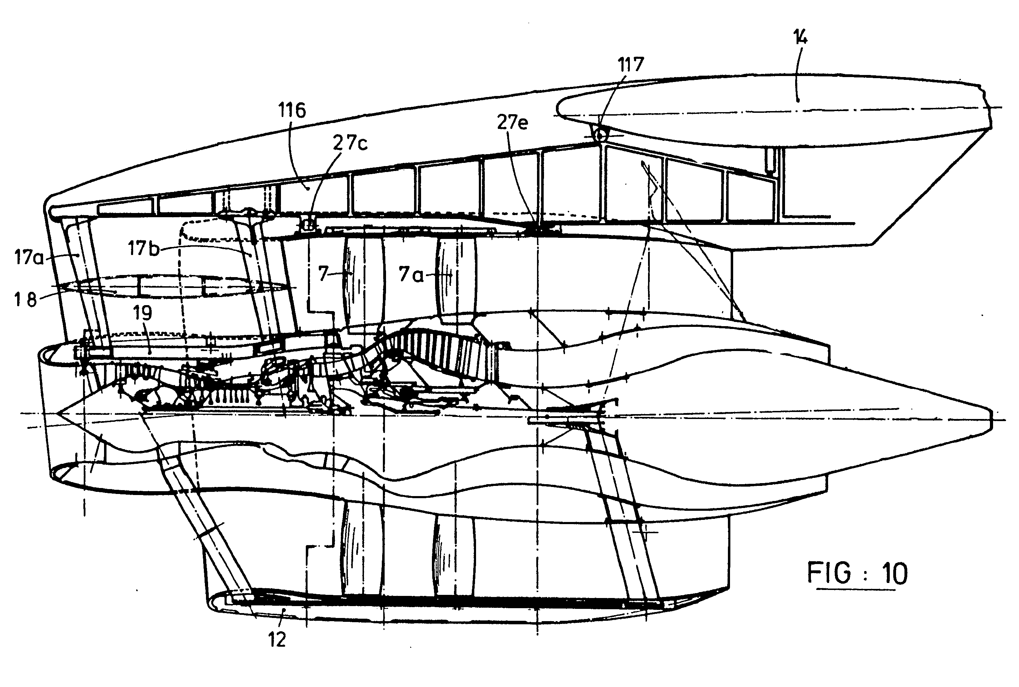

Les deux secteurs inférieurs 12b et 12c sont mobiles autour d'articulations 29 b, c, d, e, du caisson structural 15 de l'aile dont une vue partielle selon F1 est montrée à la figure 5a, ledit caisson se raccordant latéralement à l'intrados 14b, de l'aile par un profil de Karman 30 évolutif de l'amont vers l'aval. Au moyen des charnières d'articulations 29b à 29e, les deux coquilles 12b et 12c peuvent s'ouvrir vers le haut afin de laisser un accès au moteur ou se fermer et être verrouillées en 12d en partie basse par un moyen de verrouillage connu.

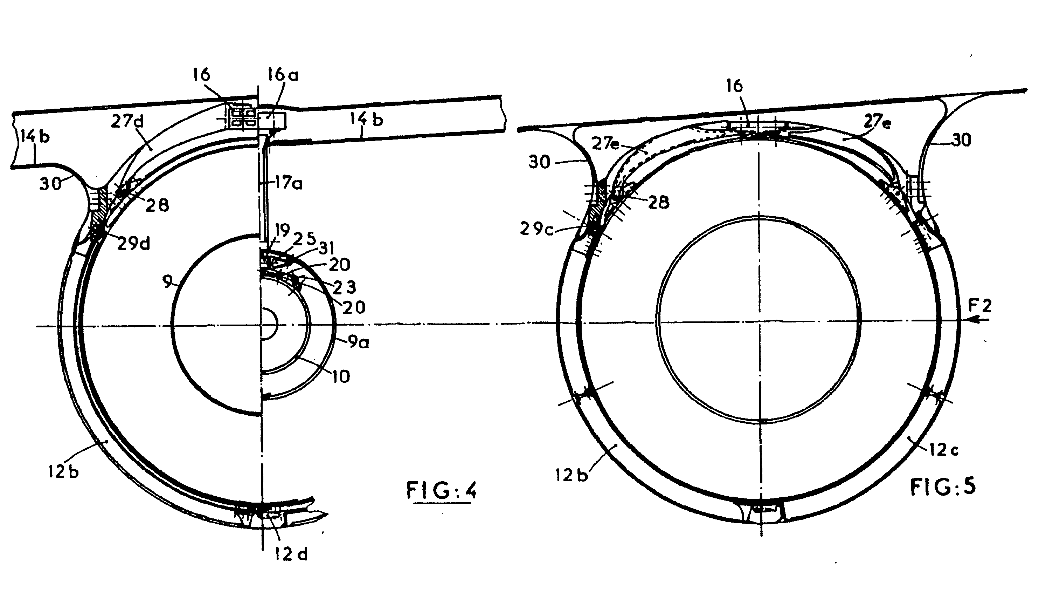

De même les secteurs 9 et 9b du capotage intérieur 9 peuvent s'articuler en 31 (figures 2 et 4) afin de laisser l'accès au moteur.

Des volets mobiles 32 sont disposés en aval des hélices contrarotatives 7, 7a sur au moins les deux secteurs inférieurs 12b, 12c du capotage extérieur. Dans l'exemple représenté ici où le capotage se prolonge en arrière du bord de fuite de l'aile, le secteur supérieur 12a du capotage 12 comporte également un volet mobile 32. Chacun de ces volets est rendu mobile par deux vérins à vis 33, (montrés à la figure 7 et disposés dans l'épaisseur du capotage en 34 figure 6) d'une première position où les volets sont situés dans le prolongement du capotage extérieur (en traits pleins sur les figures 1 et 7) vers une seconde position intermédiaire rabattue vers l'axe du turboréacteur (en traits mixtes sur la figure 7) de façon à permettre une variation de section de la tuyère secondaire, ceci afin d'optimiser le taux de dilution en fonction des paramètres de fonctionnement du moteur.

Au moyen des vérins 33 et d'une cinématique appropriée les volets 32 peuvent être déplacés en translation vers l'aval et en rotation depuis leur première ou seconde position puisqu'à une troisième position (en traits mixtes sur la figure 1) où ils sont complètement rabattus vers le capotage intérieur 9 et découvrent des grilles du capotage extérieur (non représentées). Les volets 32 se comportent alors dans cette 3e position en portes d'inverseur de poussée pour le flux secondaire du turboréacteur.

Une disposition analogue (avec des volets moins grands et écopant vers l'extérieur) pourrait être adoptée si les hélices possèdent un calage variable. Les positions intermédiaires des volets ne sont plus utiles car le calage variable permet d'assurer le réglage du moteur ; la position grand ouverte permet de faciliter le cheminement inverse de l'air lorsque les hélices sont en position d'inversion de poussée.

Pour compléter cette description on ajoutera que l'ensemble de la nacelle est rigidifié en amont par un bras structural radial 35, ledit bras traversant (et étant solidaire de) le carter moteur et les capotages intérieur et extérieur. En aval figures (1, 6 et 8), trois bras structuraux 36 à 120° et deux viroles de carters 10 et 37 sont destinées à rigidifier la structure 12b et 12c, et à stabiliser le fût intérieur du moteur 43.

Afin de permettre les dilatations les bras structuraux 36 coulissent à leur extrémité sur des axes 38 disposés parallèlement à l'axe moteur. Ce coulissement est également utilisé lors du démontage du moteur : en effet, pour dégager les centrages et labyrinthes 40a, b, c, d on démonte l'accouplement 41 du carter 37, sur le moteur, et l'on recule l'arrière-corps central 42, les capotages 12b et 12c étant ouverts.

Le moteur peut alors être déposé à partir du palonnier comme décrit précedemment, l'arrière corps central restant sur l'avion. Si on se contente d'ouvrir les capotages 9a, 9b et 12b, 12c, on obtient un accès parfait aux hélices et au générateur de gaz pour les opérations courantes de maintenance.

L'ensemble de cette structure permet des gains importants sur la consommation du carburant par réduction de la trainée de la nacelle, facilite l'entretien du moteur au moyen des capots latéraux ouvrants et facilite l'intégration d'un inverseur de poussée efficace sur les contrafans arrière.

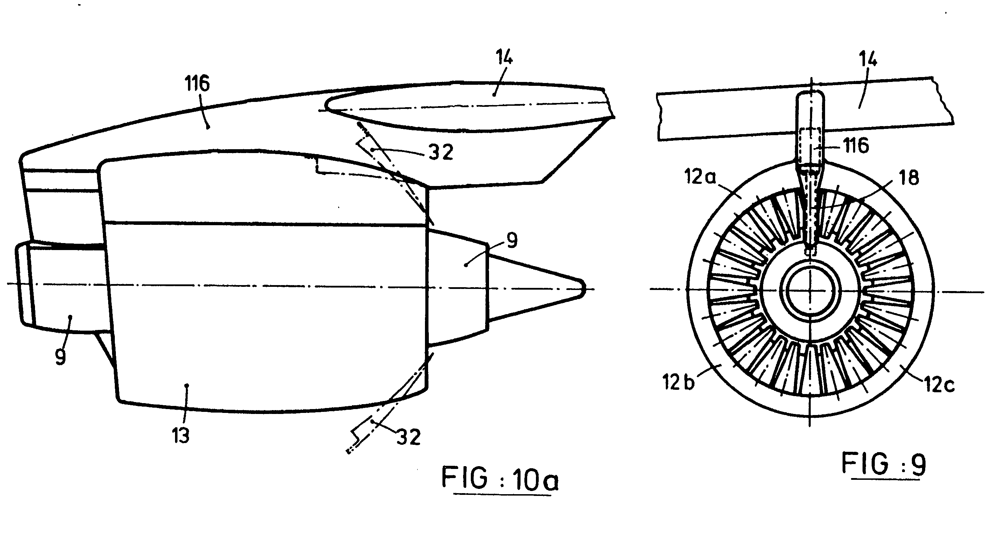

En regard des figures 9, 10, et 10a, le second mode d'accrochage du turboréacteur sous l'aile de l'avion va être décrit. Par rapport à la disposition précédemment décrite, le groupe turboréacteur reste globalement inchangé et les références chiffrées concernant le moteur et la nacelle sont identiques à celles des figures correspondantes 1 et 1a du mode précédent.

Dans ce mode d'accrochage, la nacelle est montée en "pod" de façon classique. Un mât de support avion 116 est suspendu à la poutre structurale 16 de l'aile 14 au moyen d'axes 117 et d'une structure d'accrochage de type commun et qui ne sera pas décrite plus avant. La partie supérieure 12a de la nacelle est alors accrochée par les extrémités supérieures des bras 17a et 17b et par les potences transversales doubles 27b..27c à la partie inférieure du mât 116.

Le reste de la description de la nacelle est inchangé pour ce mode de réalisation et l'utilisation des dispositions de l'invention relatives aux capotages ouvrants permet de concevoir une nacelle en "pod" possédant les mêmes qualités de facilité de maintenance.

En outre dans ce mode de réalisation, le fait que le moteur soit séparé de l'intrados de l'aile par la hauteur du mât 116 permet de réaliser un inverseur de flux possédant soit deux, soit trois soit quatre portes basculantes 32, selon les nécessités de l'avionneur, ce qui améliore l'efficacité de la réserve, sans perturber l'écoulement du flux le long de l'intrados de l'aile.

## Revendications

1. Nacelle pour suspendre sous l'aile d'un avion un groupe turboréacteur double flux à très haut taux de dilution du type dit contrafan arrière comportant un générateur de gaz entraînant deux turbines libres (6, 6a) contrarotatives imbriquées solidaires d'hélices contrarotatives (7, 7a) carénées situées en aval du générateur de gaz, ladite nacelle (13) comportant de façon connue un capotage intérieur (9) de forme générale cylindrique entourant le carter moteur (10) et formant la paroi interne de la veine de flux froid et pouvant s'ouvrir de manière connue pour effectuer les travaux de maintenance, et un capotage extérieur (12) lui aussi de forme générale cylindrique dont le bord interne forme la paroi externe de la veine de flux froid et dont le bord externe forme l'enveloppe de la nacelle, caractérisée en ce que le groupe turboréacteur est suspendu à l'aile de l'avion par un mât (18) comportant deux bras (17a, 17b) disposés dans un plan vertical contenant l'axe longitudinal du groupe turboréacteur, bras contenu dans un carénage profilé en forme de fuseau, et dont les extrémités supérieures sont liées à un caisson structural (16) de l'aile et les extrémités inférieures sont solidaires d'un palonnier (19) horizontal d'axe longitudinal disposé entre le carter moteur (10) et le capotage intérieur (9), le groupe turboréacteur étant accroché au palonnier.

2. Nacelle selon la revendication 1 caractérisée en ce que les extrémités supérieures des bras du mât (18) sont reliées au caisson structural (16) de l'aile par un mât (116) de suspension avion de type conventionnel et en ce que le capotage extérieur (12) se raccorde dans sa partie supérieure audit mât de suspension avion.

3. Nacelle selon la revendication 1 caractérisée en ce que les extrémités supérieures des bras du mât (18) sont solidaires du caisson structural (16) de l'aile et en ce que l'épaisseur du capotage extérieur, comprise entre les bords interne et externe dudit capotage extérieur, est dans sa partie supérieure, intégrée à l'épaisseur de l'aile (14) de l'avion, en ce que le bord extérieur dudit capotage se raccorde à l'intrados de l'aile par un profil du type Karman (30) évolutif de l'amont vers l'aval et en ce que dans un plan longitudinal axial à la verticale de l'axe longitudinal du groupe turboréacteur, la génératrice définissant le bord interne du capotage extérieur est globalement tangente à l'intrados (14b) de l'aile.

4. Nacelle selon l'une des revendications 2 ou 3, caractérisée en ce que le groupe turboréacteur est accroché au palonnier (19), par l'extrémité amont (20, 23) de celui-ci sur le carter moteur (10) au droit des aubes directrices d'entrée et par l'extrémité aval (22, 24) de celui-ci sur la structure de transition disposée entre la turbine basse pression et les turbines libres.

5. Nacelle selon l'une quelconque des revendications 2 à 4 caractérisée en ce que le capotage extérieur est accroché au mât (116) de suspension avion sous l'aile ou au caisson structural (16) de l'aile au moyen de potences transversales (27b, 27c, 27d, 27e) deux au moins de ces potences étant disposées respectivement, (27c), en amont et, (27e) en aval, des hélices contrarotatives.

6. Nacelle selon l'une quelconque des revendications 3 à 5 caractérisée en ce que le capotage extérieur (12) est séparé circulairement en trois secteurs (12a, 12b, 12c) de 120°, le secteur supérieur (12a) étant symétrique par rapport au plan longitudinal vertical axial du groupe turboréacteur, ledit secteur étant intégré à la structure de l'aile (14) et se raccordant latéralement à l'intrados (14b) de l'aile par un profil évolutif du type Karman (30).

7. Nacelle selon la revendication 6, caractérisée en ce que les deux secteurs latéraux (12b, 12c) du capotage extérieur comportent des capots mobiles pouvant se relever latéralement autour de charnières longitudinales d'articulation (29b, 29c, 29d, 29g) fixées sur le secteur supérieur (12d) et pouvant se verrouiller entre eux en partie basse.

8. Nacelle selon l'une des revendications 6 ou 7 caractérisée en ce que les trois ou au moins deux des secteurs du capotage extérieur comportent des volets (32) disposés en aval des hélices contrarotatives et mobiles en rotation d'une première position, où ils sont situés dans le prolongement du capotage extérieur (12) vers une seconde position rabattue vers l'axe du turboréacteur pour faire varier la section de la tuyère secondaire.

9. Nacelle selon la revendication 8, caractérisée en ce que lesdits volets (32) sont mobiles en translation et en rotation depuis leur première position jusqu'à une troisième position où ils sont complètement rabattus vers le capotage intérieur (9) et découvrent des grilles du capotage extérieur afin d'inverser la poussée du flux secondaire.

10. Nacelle selon l'une des revendications 1 à 9 caractérisée en ce qu'un carter structural 35,37 coulissant sur l'arrière-corps central 42 est solidarisé à la structure arrière et interne du moteur par l'accouplement 41.

11. Nacelle selon l'une des revendications 1 à 10 caractérisée en ce que le capotage extérieur comporte une structure annulaire de rétention (39).

## Ansprüche

1. Gondel zum Aufhängen einer Mantelstrom-Turboluftstrahltriebwerkbaugruppe vom Aft-Kontrafan-Typ mit sehr hohem Nebenstromverhältnis unter einer Flugzeugtragfläche, wobei das Turboluftstrahltriebwerk einen Gasgenerator aufweist, der zwei verzahnt angeordnete gegenläufige Freilaufturbinen (6, 6a) antreibt, die mit stromlinienförmig verkleideten, stromabwärts des Gasgenerators angeordneten gegenläufigen Propellern (7, 7a) fest verbunden sind, wobei die Gondel (13) in bekannter Weise eine im wesentlichen zylinderförmige Innenverkleidung (9) besitzt, die das Motorgehäuse (10) umgibt und die Innenwandung des Kaltluftstroms bildet und zur Durchführung von Wartungsarbeiten in bekannter Weise geöffnet werden kann, sowie eine ebenfalls im wesentlichen zylinderförmige Außenverkleidung (12), deren innerer Rand die Außenwandung des Kaltluftstroms bildet und deren äußerer Rand die Hülle der Gondel bildet, **dadurch gekennzeichnet,** daß die Turboluftstrahltriebwerkbaugruppe an der Flugzeugtragfläche mittels eines Stiels (18) aufgehängt ist, der zwei in einer die Längsachse der Turboluftstrahltriebwerkbaugruppe enthaltenden vertikalen Ebene angeordnete Arme besitzt, die sich in einer stromlinienförmigen Verkleidung mit spindelförmigem Profil befinden und deren obere Enden mit einer Flügelkastenkonstruktion (16) in Verbindung stehen und deren untere Enden fest mit einer horiziontalen Traverse (19) verbunden sind, deren Längsachse zwischen dem Motorgehäuse (10) und der Innenverkleidung (9) liegt, und daß die Turboluftstrahltriebwerkbaugruppe an dieser Traverse aufgehängt ist.

2. Gondel nach Anspruch 1, dadurch gekennzeichnet, daß die oberen Enden der Arme des Stiels (18) über eine Flugzeugaufhängungsstrebe (116) üblicher Bauart mit der Flügelkastenkonstruktion (16) verbunden ist und daß der obere Teil der Außenverkleidung (12) in diese Flugzeugaufhängungsstrebe übergeht.

3. Gondel nach Anspruch 1, dadurch gekennzeichnet, daß die oberen Enden der Arme des Stiels (18) fest mit der Flügelkastenkonstruktion (16) verbunden sind, daß die Dickenausdehnung zwischen dem inneren und dem äußeren Rand der Außenverkleidung im oberen Bereich integriert ist in die Dickenausdehnung der Flugzeugtragfläche (14), daß der äußere Rand der genannten Verkleidung über ein sich von der stromaufwärtigen Seite zur stromabwärtigen Seiten erweiterndes Karman-Profil (30) in die Flügelunterseite übergeht, und daß die den inneren Rand der Außenverkleidung bestimmende Erzeugende in einer zur Vertikalen der Längsachse der Turboluftstrahltriebwerkbaugruppe axialen Längsebene die Flügelunterseite insgesamt berührt.

4. Gondel nach einem der Ansprüche 2 oder 3, dadurch gekennzeichnet, daß die Turboluftstrahltriebwerkbaugruppe über das stromaufwärtige Ende (20, 23) der Traverse (19) am Ort der Eingangsleitschaufeln an dem Motorgehäuse (10) und über das stromabwärtige Ende (22, 24) der Traverse (19) an der zwischen der Niederdruckturbine und den Freilaufturbinen angeordneten Übergangsstruktur aufgehängt ist.

5. Gondel nach einem der Ansprüche 2 bis 4, dadurch gekennzeichnet, daß die Außenverkleidung mit Hilfe transversaler Auslegerarme (27b, 27c, 27d, 27e) an der Flugzeugaufhängungsstrebe (116) unter der Tragfläche oder an der Flügelkastenkonstruktion (16) aufgehängt ist, wobei wenigstens zwei dieser Auslegerarme stromaufwärts (27) bzw. stromabwärts (27e) der gegenläufigen Propeller angeordnet sind.

6. Gondel nach einem der Ansprüche 3 bis 5, dadurch gekennzeichnet, daß die Außenverkleidung (12) kreisförmig in drei 120°-Sektoren (12,a, 12b, 12c) unterteilt ist, von denen der obere Sektor (12a) symmetrisch zur vertikalen axialen Längsebene des Turboluftstrahltriebwerkbaugruppe angeordnet und in die Konstruktion der Tragfläche (14) integriert ist und seitlich über ein sich erweiterndes Karman-Profil (30) in die Flügelunterseite übergeht.

7. Gondel nach Anspruch 6, dadurch gekennzeichnet, daß die zwei seitlichen Sektoren (12b, 12c) der Außenverkleidung bewegliche Hauben besitzen, die um an dem oberen Sektor (12d) befestigte Längsscharniere (29b, 29c, 29d, 29g) seitlich nach oben verschwenkbar und in ihrem unteren Teil miteinander verriegelbar sind.

8. Gondel nach Anspruch 6 oder 7, dadurch gekennzeichnet, daß die drei oder wenigstens zwei der Sektoren der Außenverkleidung Klappen (32) aufweisen, die stromabwärts der gegenläufigen Propeller angeordnet und aus einer ersten Position, in der sie in Verlängerung der Außenverkleidung (12) liegen, in eine zweite Position verschwenkbar sind, in der sie gegen die Achse des Turboluftstrahltriebwerks geklappt sind, um den Querschnitt der sekundären Düse zu verändern.

9. Gondel nach Anspruch 8, dadurch gekennzeichnet, daß die Klappen (32) aus ihrer ersten Position bis in eine dritte Position verschiebbar und drehbar sind, in der sie vollständig gegen die Innenverkleidung (9) geklappt sind und die Gitter der Außenverkleidung freigeben, um eine Schubumkehr des sekundären Stroms herbeizuführen.

10. Gondel nach einem der Ansprüche 1 bis 9, dadurch gekennzeichnet, daß eine auf dem zentralen hinteren Körper (42) gleitende Gehäusekonstruktion (35, 37) durch eine Kupplung (41) mit der hinteren Innenkonstruktion des Motors verbunden ist.

11. Gondel nach einem der Ansprüche 1 bis 10, dadurch gekennzeichnet, daß die Außenverkleidung eine ringförmige Haltekonstruktion (39) aufweist.

## Claims

1. Engine nacelle for suspending under the wing of an aircraft a double-flow high bypass ratio turbojet engine of the type known as a pusher contrafan comprising a gas generator driving two free and imbricated counter-rotating turbines (6, 6a) with integral counter-rotating ducted fans (7, 7a) situated downstream of the gas generator, the said nacelle (13) comprising in a known way an inner casing (9) of generally cylindrical shape surrounding the engine casing (10) and forming the inner wall of the cold air stream and being capable of opening in a known way to permit maintenance work to be performed, and an outer casing (12) also of generally cylindrical shape of which the inner face forms the outer wall of the cold air stream and whose outer face constitutes the skin of the nacelle, characterised in that the turbojet engine assembly is suspended from the wing of the aircraft by a pylon (18) comprising two struts (17a, 17b) arranged in a vertical plane including the longitudinal axis of the turbojet engine, these struts being enclosed within a streamline shell, the upper ends of which are attached to a structural box girder member (16) of the wing and the lower ends are integrated with a horizontal spreader beam (19) with its longitudinal axis lying between the engine casing (10) and the inner casing (9), the turbojet engine assembly being attached to the spreader beam.

2. Engine nacelle in accordance with Claim 1 characterised in that the upper ends of the struts of the pylon (18) are connected to the structural box girder member (16) of the wing by an aircraft engine suspension pylon (116) of conventional type and in that the upper part of the outer casing (12) is connected to the said aircraft engine suspension pylon.

3. Engine nacelle in accordance with Claim 1 characterised in that the upper ends of the struts of the pylon (18) form an integral part of the structural box girder member (16) and in that the thickness of the outer casing, that which lies between the inner and outer faces of the said outer casing is, in its upper part, incorporated in the depth of the wing (14) and in that the outer face of the said casing is merged into the underside of the wing by a fairing profile of the Karman type (30) of a shape varying from front to rear and in that in a longitudinal plane axial to the vertical of the longitudinal axis of the turbojet engine assembly, the generatrix defining the inner face of the outer casing is overall at a tangent to the underside (14b) of the wing.

4. Engine nacelle in accordance with either of Claims 2 or 3, characterised in that the upstream end (20, 23) of the spreader beam (19) is attached to the turbojet engine by the casing (10) of the latter in the area of the intake guide vanes and at the downstream end (22, 24) it is attached to the engine in the area of the transitional stage between the low pressure turbine and the free turbines.

5. Engine nacelle in accordance with any of Claims 2 to 4, characterised in that the outer casing is attached to the aircraft engine suspension pylon (116) under the wing or to the structural box member (16) of the wing by means of the transverse brackets (27b, 27c, 27d, 27e) two at least of these brackets being arranged respectively upstream (27c) and downstream (27e) of the counter-rotating fans.

6. Engine nacelle in accordance with any of Claims 3 to 5, characterised in that the outer casing (12) is separated circumferentially into three segments (12a, 12b, 12c) each of 120°, the upper segment (12a) being symmetrically disposed in relation to the longitudinal vertical axial plane of the turbojet engine, the said segment being incorporated in the wing structure (14) and being merged laterally with the underside (14b) of the wing by a variable-profile fairing of the Karman type (30).

7. Engine nacelle in accordance with Claim 6, characterised in that the two side segments (12b, 12c) of the outer casing comprise movable shells capable of being raised laterally on longitudinal hinges (29b, 29c, 29d, 29g) fixed to the upper segment (12d) and able to be locked together at their lowest part.

8. Engine nacelle in accordance with one of Claims 6 or 7, characterised in that the three or at least two of the outer casing segments comprise the flaps (32) placed downstream of the counter-rotating fans and movable rotatably from a first position where they are situated as an extension of the outer casing (12) into a second position where they are lowered towards the axis of the turbojet engine in order to alter the cross sectional area of the secondary air stream duct.

9. Engine nacelle in accordance with Claim 8, characterised in that the said flaps (32) can be moved and rotated from their first position into a third position where they are completely lowered towards the inner casing (9) and uncover grilles in the outer casing in order to reverse the direction of flow of the secondary air stream.

10. Engine nacelle in accordance with any one of Claims 1 to 9, characterised in that a structural casing [sic, strut ?] (35, 37), sliding on the central rear body (42) is rigidly attached to the rear and internal structure of the engine by the coupling (41).

11. Engine nacelle in accordance with any one of Claims 1 to 10, characterised in that the outer casing comprises an annular restraining structure (39).

FIG:1

FIG: 1a

FIG: 3

EP 0 314 568 B1

FIG:2

FIG:5a

FIG:5

FIG:4

FIG:7

FIG:6

FIG:8

FIG : 10

FIG : 9

FIG : 10a